# EUROPEAN PATENT APPLICATION

(11) **EP 4 597 868 A1**
(43) Date of publication of application: **06.08.2025**
(21) Application number: 23872970.1
(22) Date of filing: 22.09.2023
(51) Int. Cl.: H04B 7/06, H04B 7/08, H04W 8/24, H04W 24/08, H04W 24/10, H04W 72/231, H04W 52/14, H04W 52/24

(54) **METHOD AND DEVICE FOR BEAM INDICATION IN WIRELESS COMMUNICATION SYSTEM**

(30) Priority: 29.09.2022 US 202263411597 P; 10.05.2023 KR 20230060746
(71) Applicant: LG Electronics Inc., Yeongdeungpo-gu Seoul 07336 (KR)
(72) Inventor: KANG, Jiwon, Seoul 06772 (KR); PARK, Haewook, Seoul 06772 (KR); GO, Seongwon, Seoul 06772 (KR)
(74) Representative: Plasseraud IP
(86) International application number: PCT/KR2023/014503
(87) International publication number: WO 2024/071853

(57) **Abstract**

A method performed by a terminal in a wireless communication system, according to one embodiment of the present disclosure, may comprise the steps of: receiving configuration information; receiving beam indication; and receiving, on the basis of the beam indication, physical signals/channels from the same time, frequency, and space resources. The configuration information includes i) a configuration for beam indication related to spatial prediction, and ii) information related to a plurality of reference signals (RSs) for the beam indication. The beam indication indicates one or more RSs from among the plurality of RSs.

## Description

### [TECHNICAL FIELD]

The present disclosure relates to a method and a device for beam indication in a wireless communication system.

### [BACKGROUND]

A mobile communication system has been developed to provide a voice service while ensuring the activity of a user. However, the area of the mobile communication system has extended to a data service in addition to a voice. Due to the current explosive increase in traffic, there is a shortage of resources, and thus users demand a higher speed service. Accordingly, there is a need for a more advanced mobile communication system.

Requirements for a next-generation mobile communication system need to be able to support the accommodation of explosive data traffic, a dramatic increase in the data rate per user, the accommodation of a significant increase in the number of connected devices, very low end-to-end latency, and high-energy efficiency. To this end, various technologies, such as dual connectivity, massive multiple input multiple output (MIMO), in-band full duplex, non-orthogonal multiple access (NOMA), super wideband support, and device networking, are researched.

In relation to beam management, Set A and Set B are defined. Specifically, according to BM-Casel, a UE estimates/determines beams of the Set A (e.g., preferred beam(s) among the beams of the Set A) based on measurement for beams of the Set B (e.g., measurement of RSs related to the beams of the Set B).

### [DISCLOSURE]

### [TECHNICAL PROBLEM]

When a beam (DL RS) of Set A is indicated through a beam prediction result of a base station, a problem may occur in which an application time of the indicated beam is delayed. Specifically, when a user equipment (UE) has not recently measured a DL RS related to the indicated beam, an RS overhead for an additional Rx beam selection/refinement process may increase. In other words, when a beam (RS) that is not managed by the UE or a beam (RS) that is not measured by the UE is indicated, reception/measurement of the RS related to the beam must be performed in order to apply the beam. For example, according to a conventional scheme, when the UE does not know a beam (e.g., target TCI state) indicated as an activation target through MAC CE in slot n (i.e., the target TCI state is an unknown TCI state), the UE is defined to receive a PDCCH related to the target TCI state after a predefined time from slot n.

When a beam unknown to the UE is indicated as described above, a delay in beam application may occur due to operations additionally performed for beam application.

The present disclosure proposes a method for solving the problem described above.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [TECHNICAL SOLUTION]

A method performed by a user equipment (UE) in a wireless communication system according to an embodiment of the present disclosure comprises receiving configuration information, receiving bean indication, and receiving physical signals/channels in same time, frequency, and spatial resources based on the beam indication. The configuration information includes i) a configuration for beam indication related to spatial prediction, and ii) information related to a plurality of reference signals (RSs) for the beam indication. The bean indication represents one or more RSs among the plurality of RSs.

The beam indication may include i) information for the one or more RSs, and ii) information for one or more combining coefficients related to the one or more RSs.

A spatial domain receive filter related to the spatial resource may be related to an RS determined based on the one or more RSs and the one or more combining coefficients.

The beam indication may include coordinate information of the one or more RSs within a beam grid.

A spatial domain receive filter related to the spatial resource may be related to an RS determined based on the coordinate information.

The one or more RSs may include i) at least one downlink RS (DL RS), and ii) at least one uplink RS (UL RS).

A spatial domain receive filter related to the spatial resource may be determined based on i) at least one first spatial domain receive filter and ii) at least one second spatial domain receive filter.

The at least one first spatial domain receive filter may be based on the at least one DL RS. The at least one second spatial domain receive filter may be related to at least one spatial domain transmission filter based on the at least one UL RS.

The beam indication may include i) information for a plurality of downlink RSs (DL RSs) of the one or more RSs, and ii) information for combining coefficients related to the plurality of DL RSs.

A pathloss estimate for uplink power control may be determined based on the plurality of DL RSs.

The pathloss estimate for the uplink power control may be determined based on i) pathloss estimates obtained based on the plurality of DL RSs, and ii) the combining coefficients.

One DL RS may be determined based on the plurality of DL RSs and the combining coefficients. The pathloss estimate for the uplink power control may be obtained based on one DL RS.

The one or more RSs may be based on RSs received by the UE within a predetermined time before a time of receiving the beam indication.

The configuration for the beam indication may include i) information for a plurality of combining coefficients related to the plurality of RSs, or ii) coordinate information of the plurality of RSs within a beam grid.

The method may further comprise transmitting capability information. The capability information may include i) information for combining coefficients which may be supported by the UE and/or ii) information for beams which may be combined by the UE based on the combining coefficients.

A user equipment (UE) operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include receiving configuration information, receiving bean indication, and receiving physical signals/channels in same time, frequency, and spatial resources based on the beam indication. The configuration information includes i) a configuration for beam indication related to spatial prediction, and ii) information related to a plurality of reference signals (RSs) for the beam indication. The bean indication represents one or more RSs among the plurality of RSs.

A device according to another embodiment of the present disclosure comprises one or more memories and one or more processors functionally connected to the one or more memories.

The one or more memories include instructions of configuring the one or more processors to perform operations based on being executed by the one or more processors.

The operations include receiving configuration information, receiving bean indication, and receiving physical signals/channels in same time, frequency, and spatial resources based on the beam indication. The configuration information includes i) a configuration for beam indication related to spatial prediction, and ii) information related to a plurality of reference signals (RSs) for the beam indication. The bean indication represents one or more RSs among the plurality of RSs.

One or more non-transitory computer-readable media according to another embodiment of the present disclosure stores one or more instructions.

The one or more instructions executable by one or more processors configure the one or more processors to perform operations.

The operations include receiving configuration information, receiving bean indication, and receiving physical signals/channels in same time, frequency, and spatial resources based on the beam indication. The configuration information includes i) a configuration for beam indication related to spatial prediction, and ii) information related to a plurality of reference signals (RSs) for the beam indication. The bean indication represents one or more RSs among the plurality of RSs.

A method performed by a base station in a wireless communication system according to another embodiment of the present disclosure comprises transmitting configuration information, transmitting bean indication, and transmitting physical signals/channels in same time, frequency, and spatial resources based on the beam indication. wherein the configuration information includes i) a configuration for beam indication related to spatial prediction, and ii) information related to a plurality of reference signals (RSs) for the beam indication. The bean indication representes one or more RSs among the plurality of RSs.

A base station operating in a wireless communication system according to another embodiment of the present disclosure comprises one or more transceivers, one or more processors, and one or more memories operably connectable to the one or more processors, and storing instructions of configuring the one or more processors to perform operations based on being executed by the one or more processors.

The operations include transmitting configuration information, transmitting bean indication, and transmitting physical signals/channels in same time, frequency, and spatial resources based on the beam indication. wherein the configuration information includes i) a configuration for beam indication related to spatial prediction, and ii) information related to a plurality of reference signals (RSs) for the beam indication. The bean indication representes one or more RSs among the plurality of RSs.

### [ADVANTAGEOUS EFFECTS]

According to an embodiment of the present disclosure, even when a base station indicates a beam within a beam set (e.g., Set A) that is not measured by a UE, the beam can be applied without a procedure requiring additional RS overhead based on one or more RSs. Therefore, it is possible to reduce a latency of transmission and reception operations based on the application of the indicated beam while increasing a flexibility related to the beam indication.

Effects that could be achieved with the present disclosure are not limited to those that have been described hereinabove merely by way of example, and other effects and advantages of the present disclosure will be more clearly understood from the following description by a person skilled in the art to which the present disclosure pertains.

### [BRIEF DESCRIPTION OF THE DRAWINGS]

FIG.1 illustrates an example of beamforming using SSB and CSI-RS.
FIG. 2 is a flowchart showing an example of a DL BM procedure using SSB.
FIG. 3 illustrates a functional framework of an AI/ML model.
FIG. 4 illustrates a signaling procedure according to an embodiment of the present disclosure.
FIG. 5 is a flow chart illustrating a method performed by a user equipment according to an embodiment of the present disclosure.
FIG. 6 is a flow chart illustrating a method performed by a base station according to another embodiment of the present disclosure.
FIG. 7 illustrates configuration of a first device and a second device according to an embodiment of the present disclosure.

### [DETAILED DESCRIPTION]

A detailed description to be disclosed below together with the accompanying drawing is to describe exemplary embodiments of the present disclosure and not to describe a unique embodiment for carrying out the present disclosure. The detailed description below includes details to provide a complete understanding of the present disclosure. However, those skilled in the art know that the present disclosure may be carried out without the details.

In some cases, in order to prevent a concept of the present disclosure from being ambiguous, known structures and devices may be omitted or illustrated in a block diagram format based on core functions of each structure and device.

Hereinafter, downlink (DL) means communication from the base station to the terminal and uplink (UL) means communication from the terminal to the base station. In downlink, a transmitter may be part of the base station, and a receiver may be part of the terminal. In uplink, the transmitter may be part of the terminal and the receiver may be part of the terminal. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), AR(Augmented Reality) device, VR(Virtual Reality) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, an Unmanned Aerial Vehicle (UAV), AR(Augmented Reality) device, VR(Virtual Reality) device, and the like.

### Beam Management (BM)

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.
- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.
- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS).

Further, each BM procedure may include Tx beam sweeping for determining the Tx beam and Rx beam sweeping for determining the Rx beam.

### DL BM

The DL BM procedure may include (1) transmission of beamformed DL reference signals (RSs) (e.g., CIS-RS or SS Block (SSB)) of the eNB and (2) beam reporting of the UE.

Here, the beam reporting includes a preferred DL RS identifier (ID)(s) and L1-Reference Signal Received Power (RSRP) corresponding to the preferred DL RS identifier (ID)(s).

The DL RS ID may be an SSB Resource Indicator (SSBRI) or a CSI-RS Resource Indicator (CRI).

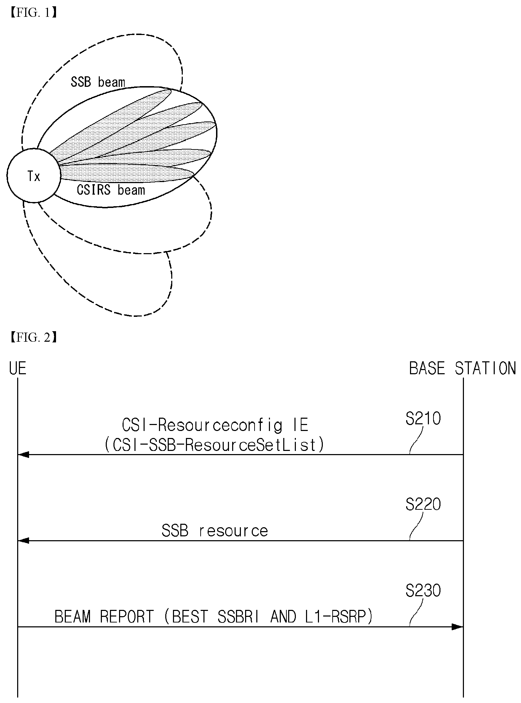

FIG.1 illustrates an example of beamforming using SSB and CSI-RS.

As illustrated in FIG. 1, an SSB beam and a CSI-RS beam may be used for the beam management. A measurement metric is an L1-RSRP for each resource/block. The SSB may be used for coarse beam management and the CSI-RS may be used for fine beam management. The SSB may be used for both the Tx beam sweeping and the Rx beam sweeping.

The Rx beam sweeping using the SSB may be performed while the UE changes the Rx beam for the same SSBRI across multiple SSB bursts. Here, one SS burst includes one or more SSBs and one SS burst set includes one or more SSB bursts.

FIG. 2 is a flowchart showing an example of a DL BM procedure using SSB.

A configuration for beam report using the SSB is performed during a CSI/beam configuration in an RRC connected state (or RRC connected mode).
- The UE receives from the eNB CSI-ResourceConfig IE including CSI-SSB-ResourceSetList including SSB resources used for the BM (S210).

Table 1 shows an example of CSI-ResourceConfig IE. As shown in Table 1, a BM configuration using the SSB is not separately defined and the SSB is configured like the CSI-RS resource.

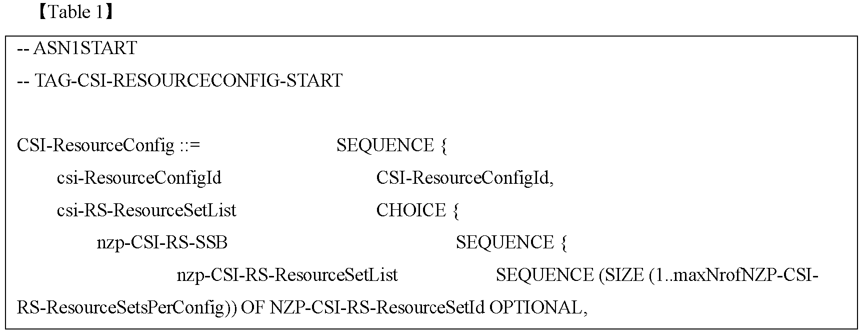

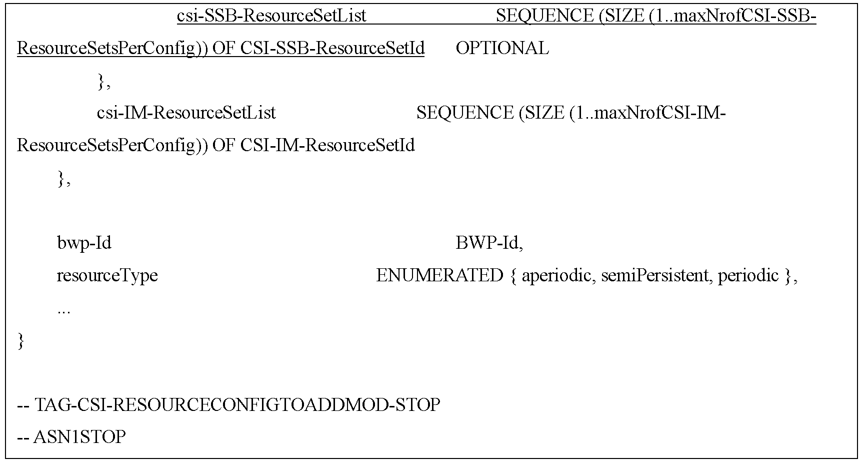

In Table 1, csi-SSB-ResourceSetList parameter represents a list of SSB resources used for beam management and reporting in one resource set. Here, SSB resource set may be configured as {SSBx1, SSBx2, SSBx3, SSBx4, ...}. For example, SSB index may be defined as 0 to 63.
- The UE receives from the eNB the SSB resource based on the CSI-SSB-ResourceSetList (S220).
- When CSI-reportConfig associated with reporting of SSBRI and L1-RSRP is configured, the UE (beam) reports to the eNB best SSBRI and L1-RSRP corresponding thereto (S230).

In other words, when reportQuantity of the CSI-reportConfig IE is configured as 'ssb-Index-RSRP', the UE reports to the eNB best SSBRI and L1-RSRP corresponding thereto.

In addition, when the CSI-RS resource is configured in the same OFDM symbol(s) as SSB (SS/PBCH Block) and 'QCL-TypeD' is applicable, the UE may assume that the CSI-RS and the SSB are quasi co-located from the viewpoint of 'QCL-TypeD'.

Here, the QCL TypeD may mean that antenna ports are QCL from the viewpoint of a spatial Rx parameter. When the UE receives a plurality of DL antenna ports having a QCL Type D relationship, the same Rx beam may be applied. Further, the UE does not expect that the CSI-RS is configured in an RE overlapped with the RE of the SSB.

### BM enhancements in NR Rel-16

The DL/UL beam indication standardized in 3GPP NR Rel-15 has been designed to separately indicate beams for each DL/UL channel/RS resource to ensure beam indication flexibility, and this indication method has been designed separately for each channel/RS.

This design direction eventually had the problem that a base station had to indicate a beam change for each channel/RS resource to multiple UEs communicating with the base station using a single beam in order to change a serving beam for the multiple UEs, which resulted in large signaling overhead and large beam change latency. Along with the UL beam change, UL power control-related parameters, especially pathloss RS (PL RS), had to be changed for each UL channel/RS, which also resulted in signaling overhead/latency problems. To complement these drawbacks, five features were introduced in Rel-16. Table 2 below shows the five features.

**[Table 2]**

| |
|---|
| 1. Default spatial relation/PL RS |
| Firstly, since many UEs in NR FR2 deployment use a single analog beam at a time and meet the beam correspondence, this enables unifying DL and UL beam indication, meaning that a DL RS resource can be commonly used as a source RS for both DL beam and UL beam indication. It is also possible to unify the source DL RS for DL/UL beam indication with the pathloss reference RS, i.e. the RS used for pathloss estimation at UE for UL power control, because gNodeB would use a same beam direction for both transmission of the DL RS and reception of the UL signal. Based on this motivation, the feature so called 'default spatial relation/pathloss reference RS' was introduced in Rel-16. In this mode of operation, spatial relation RS and pathloss reference RS do not need to be explicitly indicated from gNodeB to UE, |
| and UE uses one source RS for PDCCH/PDSCH beam as for the spatial relation RS and the pathloss reference RS. |
| Therefore, gNodeB only needs to update the DL source RS whenever needed to update the serving Tx/Rx beam for the UE. Above operation can be enabled for dedicated PUCCH, SRS, and/or PUSCH scheduled by DCI format 0_0 by respective RRC enablers. |
| 2. Multi-CC simultaneous TCI/spatial relation update |
| Secondly for multi-carrier operation, it is common that antenna/RF components are shared for same or multiple bands at both gNodeB and UE sides. For example, multi-band antenna is a very common tool for UE implementation to minimize size and cost of the communication modules. This means that a beam can be commonly used for transmission and/or reception across multiple component carriers (CCs) in one or multiple bands. Based on this motivation, BM signaling can be saved via switching beam indication from per CC basis into per CC group basis. Therefore, in Rel-16, it was introduced that the source RS for DL/UL beam indication can be updated simultaneously across multiple CCs. |
| For this operation, one or two CC lists can be configured to UE by higher layer for DL and UL, respectively. Once source RS ID(s) are activated for DL beam indication, the RS(s) with the same RS ID(s) are also activated in other CC(s) in the same CC list. Similarly, once a spatial relation RS is activated for an SRS resource in a CC, the same RS is activated as spatial relation RS for the SRS resource(s) with the same resource ID in other CC(s) in the same CC list. |
| 3. PUCCH resource group based spatial relation update |
| Third, in Rel.15, the spatial relation RS for PUCCH can be activated/deactivated per resource level. Since NR allows up to 128 PUCCH resources per UE, this per-resource based signaling would require a large amount of beam indication signaling for high/mid mobility UE. Due to the fact that one or a few beams are typically used |
| across all PUCCH resources, e.g., one common beam per UE or per UE panel, PUCCH resource group based spatial relation update mechanism was introduced in Rel-16. For a UE, up to four PUCCH resource groups can be configured by RRC per BWP, and one MAC CE can activate/deactivate a common spatial relation RS for all the PUCCH resources in the same resource group. |
| 4. MAC CE based spatial relation indication for aperiodic/semi-persistent SRS |
| Fourth, SRS is an important tool for UL link adaptation and for DL channel estimation using DL-UL channel reciprocity. |
| In Rel. 15, spatial relation RS for aperiodic SRS was configured by RRC only, meaning that a large number of SRS resources with different spatial relation RSs need to be configured by RRC to support high mobility UE, for gNodeB to dynamically select and trigger one SRS resource among them according to UE mobility. To alleviate this burden, MAC CE based spatial relation indication for aperiodic/semi-persistent SRS was introduced in Rel-16. Using this MAC CE, spatial relation RSs for a set of SRS resources can be updated together. |
| 5. MAC CE based PL RS update for aperiodic/semi-persistent SRS and PUSCH |
| Fifth, in Rel.15, pathloss reference RSs for UL power control for PUSCH and SRS could only be configured by RRC and the maximum configurable number of pathloss RSs was limited to a small number, which was four. This could lead to frequent RRC reconfiguration considering sharply beamformed RS transmission and high UE mobility in FR2. To address this issue, MAC CE based pathloss reference RS update for aperiodic/semi-persistent SRS and PUSCH was introduced in Rel-16. The maximum configurable number of pathloss reference RSs by RRC was increased to 64, and the new MAC CE can activate up to four pathloss reference RSs among them. Two MAC CEs were introduced for SRS and PUSCH, respectively. |

In Rel-16, enhancements related to beam reporting were made in addition to the beam/PL RS indication-related enhancements described above. In Rel-15, a mode in which a UE measures/reports L1-RSRP for each beam RS is supported. However, in an environment with high inter-beam interference, it is difficult to guarantee that a specific beam RS has good quality as a serving beam just because L1-RSRP, i.e., a reception intensity of the specific beam RS is high. In other words, the UE may select a beam, that has a high reception intensity but has high beam interference, and report the beam to a base station. To overcome this drawback, Rel-16 supports a new beam reporting mode in which the base station configures resources for interference measurement as well as RSs for channel measurement, and the UE measures L1-SINR for the channel resources and the interference resources based on this and reports several RSs with high L1-SINR value.

### BM enhancements in NR Rel-17

As described above, various BM enhancements were made in Rel-16. In particular, the features were created that can significantly reduce the signaling overhead/latency in relation to the beam indication method. However, channel/RS-unified beams are still not configured/indicated to a UE operating with a single serving beam.

Based on this motivation, Rel-17 will standardize a channel/RS unified beam configuration/indication method. In NR, a DL beam is indicated through a transmit configuration indicator (TCI) and thus is referred to as a unified TCI state. An existing TCI state was separately configured/indicated for each DL RS/channel, but the unified TCI state is characterized by unified configuration/indication. Basically, a DL unified TCI state indicates a QCL type-D RS which is unified applied to (some) PDCCHs, PDSCH, and (some) CSI-RS resources, and an UL unified TCI state indicates a spatial relation RS (and PL RS) which is unified applied to (some) PUCCHs, PUSCH, and (some) SRSs. Since the UL spatial relation and PL RS can also be matched with the DL beam RS for a UE, for which beam correspondence is established, in the same manner as Rel-16 default spatial relation/PL RS feature, the channels/RS to which the unified TCI state is applied can encompass both DL channels/RSs and UL channels/RSs. This is referred to as a joint DL/UL TCI state. That is, the following two modes will be supported.
- Joint DL/UL TCI configuration/indication mode: DL RS configured/indicated in a joint TCI state may be applied as not only the QCL type-D RSs for DL channels/RSs but also the spatial relation RSs (and PL RS) for UL channels/RSs. That is, if an update to the joint TCI state is indicated, the beam RSs (or/and PL RS) for the DL channels/RSs and the UL channels/RSs may be changed together.
- Separate DL and UL TCI configuration/indication mode: QCL type-D source RSs for DL channels/RSs are unified and configured/indicated by a DL TCI state, and the spatial relation RSs (and PL RS) for UL channels/RSs are unified and configured/indicated by the UL TCI state. The DL TCI state and the UL TCI state are separately configured/indicated.

The DL/UL/joint TCI state will be indicated/updated via MAC-CE and/or DCI. More specifically, one or more TCI states of multiple TCI states configured by RRC (called a TCI state pool) are activated by MAC-CE. If the multiple TCI states are activated by MAC-CE, one of the multiple TCI states is indicated by DCI.

The DCI indication will be supported via a downlink DCI format (DCI1-1/1-2) in which a TCI field is supported, and will be supported both with PDSCH scheduling and without PDSCH scheduling. In the latter case, since the PDSCH scheduling is omitted (similar to the DCI-based semi-persistent scheduling (SPS) release method), ACK transmission of the UE for the corresponding DCI will be supported.

Enhancements related to beam report will be made in Rel-17. Rel-17 beam report mode will support a mode in which a UE measures/reports an optimal beam RS for each TRP, targeting a multi-TRP environment. To this end, if a beam measurement RS set/group is divided into two subsets/sub-groups, and the base station configures them, the UE will select RS(s) for each subset/sub-group and report them along with a quality value (L1-RSRP, [L1-SINR]) of the corresponding RS.

### AI/ML related Description

With the technological advancement of artificial intelligence/machine learning (AI/ML), node(s) and UE(s) constituting a wireless communication network are becoming more intelligent/advanced.

In particular, due to the intelligence of networks/base stations, it is expected that various network/base station decision parameters can be quickly optimized and derived/applied based on various environmental parameters.

The environmental parameters may include at least one of distribution/location of base stations, distribution/location/material of buildings/furniture, etc., location/movement direction/speed of UEs, or climate information. However, the above-described parameters are only examples, and the environmental parameters may further include other environmental parameters related to the network/base station decision parameters in addition to the listed parameters.

The network/base station decision parameters may include at least one of transmission/reception power of each base station (BS), transmission power of each UE, precoder/beam of BS/UE, time/frequency resource allocation for each UE, or duplex method of each BS. However, the above-described parameters are only examples, and the network/base station decision parameters may further include other parameters determined by the network/base station in addition to the listed parameters.

In line with this trend, many standardization organizations (e.g., 3GPP, O-RAN) are considering introduction of AI/ML, and studies on this are also actively underway.

The AI/ML may be easily referred to as artificial intelligence based on deep learning in a narrow sense, but conceptually, it may be classified as below.
- Artificial Intelligence: it is any automation that allows machines to do the work that people would otherwise do.
- Machine Learning: it refers to a technology in which machines learn patterns for decision-making from data on their own without explicitly programming rules.
- Deep Learning: it is an artificial neural network-based model, and allows machines to perform feature extraction and decision from unstructured data at once. This algorithm depends on a multilayer network consisting of interconnected nodes for feature extraction and transformation, inspired by biological nervous systems, i.e., neural networks. A common deep learning network architecture includes deep neural network (DNN), recurrent neural network (RNN), and convolutional neural network (CNN).

As above, artificial intelligence (AI) is the broadest concept of AI/ML, and deep learning is the narrowest concept of AI/ML. Machine learning (ML) may be interpreted as a narrower concept than artificial intelligence and a broader concept than deep learning.

### Types of AI/ML based on various criteria

### - Offline vs Online

### Offline Learning

- Offline learning faithfully follows a sequential procedure of database collection, learning, and prediction. That is, the collection and learning may be performed offline, and the completed program may be installed in the field and used for prediction work. In most situations, such offline learning methods are used.

### Online Learning

- Online learning refers to a method of gradually improving performance by incrementally learning with additional data generated, taking advantage of the fact that data that can be used for recent learning is continuously generated via the Internet.

### Classification based on AI/ML Framework concept

### - Centralized Learning

In centralized learning, when training data collected from multiple different nodes is reported to a centralized node, all data resources/storage/learning (e.g., supervised learning, unsupervised learning, reinforcement learning, etc.) are performed in one centralized node.

### - Federated Learning

Federated learning is constructed based on data in which a collective model exists across individually distributed data owners. Instead of collecting data into the model, AI/ML models are imported into a data source, allowing local nodes/individual devices to collect data and train their own copies of the model, so there is no need to report source data to a centralized node.

In the federated learning, parameters/weight of the AI/ML model is sent again to the centralized node to support general model training. The federated learning has advantages in terms of increase in computation speed and information security. That is, a process of uploading personal data to a central server is unnecessary, and leakage and misuse of personal information can be prevented.

### - Distributed Learning

Distributed learning refers to a concept that machine learning processes are scaled and distributed across a cluster of nodes. Training models are shared across multiple nodes split and operating simultaneously to speed up model training.

### Classification according to learning method

### - Supervised Learning

Supervised learning is a machine learning task that aims to learn a mapping function from input to output, given a labeled data set. The input data is called training data and has known labels or results. Examples of the supervised learning are as follows.
1) Regression: Linear Regression, Logistic Regression
2) Instance-based Algorithms: k-Nearest Neighbor (KNN)
3) Decision Tree Algorithms: CART
4) Support Vector Machines: SVM
5) Bayesian Algorithms: Naive Bayes
6) Ensemble Algorithms: Extreme Gradient Boosting, Bagging: Random Forest

Supervised learning may be further grouped into regression and classification problems, where classification is predicting labels and regression is predicting quantities.

### - Unsupervised Learning

Unsupervised learning is a machine learning task that aims to learn functions that describe hidden structures in unlabeled data. The input data is not labeled and there are no known results. Some examples of unsupervised learning include K-means clustering, Principal Component Analysis (PCA), nonlinear Independent Component Analysis (ICA), and long short-term memory (LSTM).

### - Reinforcement Learning

In reinforcement learning (RL), an agent aims to optimize long-term goals by interacting with the environment based on a trial and error process, and is goal-oriented learning based on interaction with the environment. Examples of RL algorithm are as follows.
1) Q-learning
2) Multi-armed bandit learning
3) Deep Q Network
4) State-Action-Reward-State-Action (SARSA)
5) Temporal Difference Learning
6) Actor-critic reinforcement learning
7) Deep deterministic policy gradient
8) Monte-Carlo tree search

The reinforcement learning can be additionally grouped into model-based reinforcement learning and model-free reinforcement learning.

Model-based reinforcement learning: it refers to an RL algorithm that uses a predictive model, and obtains the transition probabilities between states using various dynamic states of the environment and a model in which these states lead to rewards.

Model-free reinforcement learning: it refers to a RL algorithm based on value or policy that achieves the maximum future reward. Multi-agent environments/states are computationally less complex and do not require an accurate representation of the environment.

RL algorithms can also be classified into value-based RL vs. policy-based RL, policy-based RL vs. non-policy RL, etc.

### Representative Model of Deep Learning

### 1. Feed-Forward Neural Network (FFNN)

FFNN consists of an input layer, a hidden layer, and an output layer.

### 2. Recurrent Neural Network (RNN)

RNN is a type of artificial neural network in which hidden nodes are connected to directed edges to form a directed cycle. It is a model suitable for processing data that sequentially appears, such as voice and text.

### 3. Convolution Neural Network (CNN)

CNN is used for two purposes of reducing model complexity and extracting good features by applying convolution operations generally used in video processing or image processing fields.
- Kernel or filter: it refers to a unit/structure that applies weight to an input of a specific range/unit.
- Stride: it refers to a range of movement of the kernel within the input.
- Feature map: it refers to a result of applying the kernel to the input.
- Padding: it refers to a value added to adjust the size of the feature map.
- Pooling: it refers to an operation to reduce the size of the feature map by downsampling the feature map (e.g., max pooling, average pooling).

### 4. Auto Encoder

An auto encoder refers to a neural network that receives a feature vector x as input and outputs the same or similar vector x'. An input node and an output node of the auto encoder have the same feature.

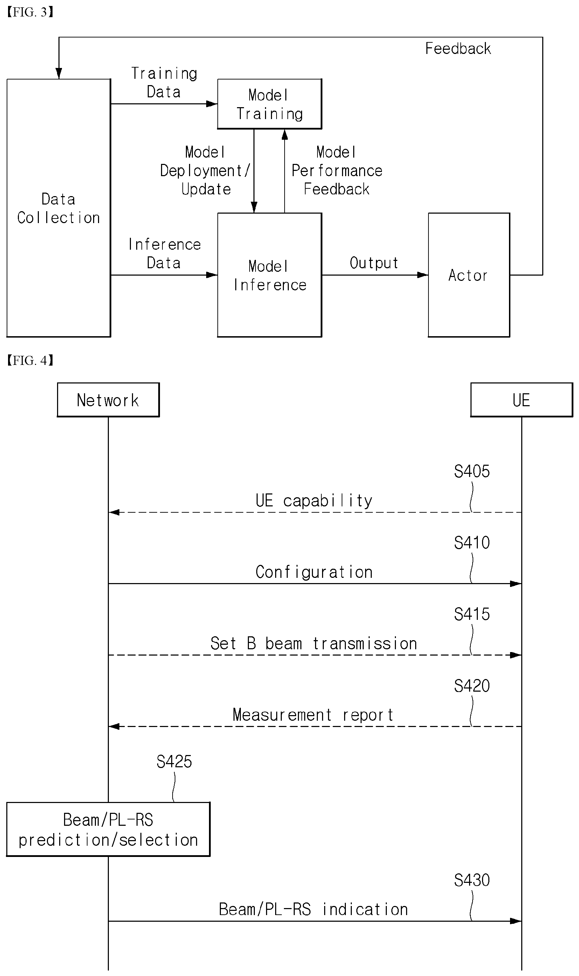

FIG. 3 illustrates a functional framework of an AI/ML model.

In the functional framework illustrated in FIG. 3, the definition of each term and the operation of each function may be based on Table 3 below.

**[Table 3]**

| |
|---|
| Data collection: Data collected from the network nodes, management entity or UE, as a basis for ML model training, data analytics and inference. |
| ML Model: A data driven algorithm by applying machine learning techniques that generates a set of outputs consisting of predicted information, based on a set of inputs |
| ML Training: An online or offline process to train an ML model by learning features and patterns that best present data and get the trained ML model for inference. |
| ML Inference: A process of using a trained ML model to make a prediction or guide the decision based on collected data and ML model. |
| • Data Collection is a function that provides input data to Model training and Model inference functions. AI/ML algorithm specific data preparation (e.g., data pre-processing and cleaning, formatting, and transformation) is not carried out in the Data Collection function. |
| Examples of input data may include measurements from UEs or different network entities, feedback from Actor, output from an AI/ML model. |
| ∘ Training Data: Data needed as input for the AI/ML Model Training function. |
| ∘ Inference Data: Data needed as input for the AI/ML Model Inference function. |
| • Model Training is a function that performs the ML model training, validation, and testing which may generate model performance metrics as part of the model testing procedure. The Model Training function is also responsible for data preparation (e.g. data pre-processing and cleaning, formatting, and transformation) based on Training Data delivered by a Data Collection function, if required. |
| ∘ Model Deployment/Update: Used to initially deploy a trained, validated, and tested AI/ML model to the Model Inference function or to deliver an updated model to the Model Inference function. |
| ▪ Note: Details of the Model Deployment/Update process as well as the use case specific AI/ML models transferred via this process are out of RAN3 Rel-17 study scope. The feasibility to single-vendor or multi-vendor environment has not been studied in RAN3 Rel-17 study. |
| • Model Inference is a function that provides AI/ML model inference output (e.g. predictions or decisions) . Model Inference function may provide model performance feedback to Model Training function when applicable. The Model inference function is also responsible for data preparation (e.g. data pre-processing and cleaning, formatting, and transformation) based on Inference Data delivered by a Data Collection function, if required. |
| ∘ Output: The inference output of the AI/ML model produced by a Model Inference function. |
| ▪ Note: Details of inference output are use case specific. |
| ∘ Model Performance Feedback: It may be used for monitoring the performance of the AI/ML model. |
| ▪ Note: Details of the Model Performance Feedback process are out of RAN3 scope. |
| • Actor is a function that receives the output from the Model inference function and triggers or performs corresponding actions. The Actor may trigger actions directed to other entities or to itself. |
| ∘ Feedback: Information that may be needed to derive training or inference data or performance feedback. |

### Data Set

A data set used in AI/ML is classified into training data, validation data, and test data, and their definition is as follows.

### - Training data

### Data set for training a model

### - Validation data

Data set for verifying a model whose training has been already completed
The validation data is a data set usually used to prevent over-fitting of a training data set.

The validation data is a data set for selecting the best among various models trained during the training process. Therefore, the validation data may be seen as a data set related to training.

### - Test data

The test data is a data set for final evaluation. The test data is independent of training.

The data set may use a training set including the above-described data in a predetermined ratio.

For example, a training set including training data and validation data in a ratio of 8:2 or 7:3 may be used.

For example, a training set including training data, validation data, and test data in a ratio of 6:2:2 may be used.

### Collaboration level

A collaboration level can be defined as follows depending on whether the AI/ML function between a base station and a UE is capable.

**[Table 4]**

| |
|---|
| **Cat 0a)** No collaboration framework: AI/ML algorithms purely implementation based and not requiring air-interface changes. -> Baseline |
| **Cat 0b)** No collaboration framework with modified Air-Interface catering to efficient implementation-based AI/ML algorithms. |
| **Cat 1)** Inter-node assistance to improve the respective nodes' AI/ML algorithms. This would apply to UEs getting assistance from gNBs (for training, adaptation, etc.) and vice-versa. This level does not require model exchange between network nodes. |
| **Cat 2)** Joint ML operation between UEs and gNBs. This level requires AI/ML model instruction or exchange between network nodes. |

The collaboration levels shown in Table 4 are examples and may be modified and utilized differently from the illustrated examples based on the implementation method. For example, a collaboration level that combines two or more of the illustrated collaboration levels may be defined/utilized. For example, collaboration level(s) excluding one or more of the illustrated collaboration levels may be utilized.

In the present disclosure, '/' means 'and', 'or', or 'and/or' according to a context. In the present disclosure, 'beam' may mean a source RS for a 'spatial filter' or a 'spatial relation', and may be interpreted as a QCL (type-D) RS or a TCI state or (in case of uplink) a spatial relation RS.

As an example, in the present disclosure, 'beam' may mean a spatial filter determined based on the reference RS or the source RS. The spatial filter may include a spatial domain filter, a spatial domain transmission filter, and a spatial domain receive filter.

As an example, a beam related to UL may be referred to as i) a spatial filter (for uplink transmission or uplink reception), ii) a spatial domain filter (for uplink transmission or uplink reception), iii) an uplink spatial domain transmission filter, iv) an uplink spatial domain receive filter, v) an uplink transmission spatial filter (UL Tx spatial filter) or vi) an uplink receive spatial filter (UL Rx spatial filter).

As an example, a beam related to DL may be referred to as i) a spatial filter (for downlink transmission or downlink reception), ii) a spatial domain filter (for downlink transmission or downlink reception), iii) a downlink spatial domain transmission filter, iv) a downlink spatial domain receive filter, v) a downlink transmission spatial filter (DL Tx spatial filter) or vi) a downlink receive spatial filter (DL Rx spatial filter).

3GPP Rel-18 started a study on how to use AI/ML in the air-interface. The study item (SI) covers beam management, CSI, and positioning as the main use cases of AI/ML. The present disclosure covers a beam management method among them.

There may be two use cases performing the improved beam management using AI/ML: 'improvement of beam management performance through spatial beam prediction' and 'improvement of beam management performance through temporal beam prediction.' The present disclosure mainly considers the 'improvement of beam management performance through spatial beam prediction,' but it should be noted that the technique in the present disclosure can be modified and applied to the 'improvement of beam management performance through temporal beam prediction.'

The 'improvement of beam management performance through spatial beam prediction' is a use case that achieves more improved beam management precision with lower RS overhead based on UE location/mobility information, etc. as a measurement result for present/past beam RS. In this instance, AI/ML of a UE and/or a network (NW) may be used in a spatial beam prediction operation. For example, AI/ML may be used to achieve performance comparable to beam selection from a large number of beam RSs based on a result measured from a small number of beam RSs.

The AI/ML based beam prediction may be defined based on inputs and outputs related to an AI/ML model (of the UE and/or NW).

For example, the input may be information related to measurement of beams (e.g., RSs related to beams), and the output may be information on specific beam(s) (e.g., ID(s) of RSs related to specific beam(s)).

For example, the input may be reference signal received power (RSRP) of beams in a first set, and the output may be RSRP of beams in a second set (e.g., RSRP of RSs related to all beams or RSRP of RSs related to Set A of beams). The RSRP of the beams in the first set may include RSRP of RSs related to some of all the beams and/or RSRP related to Set B of beams. The RSRP of the beams in the second set may include RSRP of RSs related to all the beams and/or RSRP of RSs related to the Set A of beams.

Table 5 below summarizes the discussions and discussion results related to beam performance improvement.

**[Table 5]**

| |
|---|
| **Conclusion (109e):** |
| For the sub use case BM-Casel, consider the following alternatives for further study: |
| • Alt.1: Set B is a subset of Set A |
| o FFS: the number of beams in Set A and B |
| o FFS: how to determine Set B out of the beams in Set A (e.g., fixed pattern, random pattern, ...) |
| • Alt.2: Set A and Set B are different (e.g. Set A consists of narrow beams and Set B consists of wide beams) |
| o FFS: the number of beams in Set A and B |
| o FFS: QCL relation between beams in Set A and beams in Set B |
| o FFS: construction of Set B (e.g., regular pre-defined codebook, codebook other than regular pre-defined one) |
| • Note1: Set A is for DL beam prediction and Set B is for DL beam measurement. |
| • Note2: The narrow and wide beam terminology is for SI discussion only and have no specification impact |
| • Note3: The codebook constructions of Set A and Set B can be clarified by the companies. |
| **Conclusion (109e)** |
| Regarding the sub use case BM-Casel, further study the following alternatives for AI/ML input: |
| • Alt.1: Only L1-RSRP measurement based on Set B |
| • Alt.2: L1-RSRP measurement based on Set B and assistance information |
| • FFS: Assistance information. The following were mentioned by companions in the discussion: Tx and/or Rx beam shape information (e.g., Tx and/or Rx beam pattern, Tx and/or Rx beam boresight direction (azimuth and elevation), 3dB beamwidth, etc.), expected Tx and/or Rx beam for the prediction (e.g., expected Tx and/or Rx angle, Tx and/or Rx beam ID for the prediction), UE position information, UE direction information, Tx beam usage information, UE orientation information, etc. |
| • Note: The provision of assistance information may be infeasible due to the concern of disclosing proprietary information to the other side. |
| • Alt.3: CIR based on Set B |
| • Alt.4: L1-RSRP measurement based on Set B and the corresponding DL Tx and/or Rx beam ID |
| • Note1: It is up to companies to provide other alternative(s) including the combination of some alternatives |
| • Note2: All the inputs are "nominal" and only for discussion purpose. |

In the results, BM-Case1 refers to 'case of performing estimation/prediction of beams of Set A based on a measurement result of beams included in Set B.' The Set A and the Set B are different.

The Set A and the Set B related to embodiments of the present disclosure described below may be defined based on Table 5 above. The Set B may be a set including beams related to RSs transmitted by the base station (RSs received by the UE). The Set A may be a set of beams used to estimate/determine beams based on a measurement result of RSs related to the Set B. The Set A may be a set of beams used to indicate a specific beam.

The purpose of the BM-Case1 is to select/estimate/predict a beam more precisely than selecting a beam based on the existing method. Specifically, according to the BM-Casel, a beam is selected/estimated/predicted based on the Set A, which is more precise than the Set B (e.g., in selection the Set A that includes a larger number of beams than the Set B and has a shape of a beam with a narrower width than the beam of the Set B).

The present disclosure proposes a method for a base station to perform beam indication for Set A based on beam measurement and UE reporting results based on Set B. Here, 'beam indication for Set A' means beam indication for a higher beam granularity (e.g., more beams, a larger maximum/minimum beam angle difference, a smaller inter-beam angle difference, etc.) and may be applied even when Set A is not explicitly defined/set.

As an example, in the present disclosure, 'Set A' and 'Set B' are terms used to refer to beam sets defined/configured for measurement/reporting of the UE, and thus, beam set(s) defined/configured for beam indication of the base station may be referred to differently. In other words, the beam set(s) for the beam indication of the base station may be configured separately from the beam sets for the measurement/reporting of the UE. In an embodiment to be described below, the terms 'Set A' or 'Set B' are used in relation to the beam indication, but the terms may mean that the beam indicated by the base station have the same characteristics as 'Set A' or 'Set B'.

According to the existing 3GPP NR beam indication scheme, the beam RS ID (e.g., CRI, SSBRI) is indicated as a source/reference RS to be used for transmission and/or reception of a target RS/channel.

According to the DL beam indication scheme, the base station designates the QCL source RS to the UE as a specific CSI-RS resource or SSB resource in terms of spatial Rx parameters for the target channel/RS (QCL type-D RS). The UE that receives the indication may receive the target channel/RS with the beam that receives the source RS. At this time, the UE is not forced to receive the target channel/RS with the same UE beam as the beam that receives the source RS. The base station informs the UE of the source RS in order to prevent unnecessary reception beam searches of the UE.

According to the UL beam indication scheme, the base station designates the QCL source RS to the UE as a specific CSI-RS resource, SSB resource, or SSR resource in terms of the spatial Rx parameters for the target channel/RS (spatial relation RS).

When the source RS is the DL RS (e.g., CSI-RS, SSB), the UE that receives the indication transmits a target UL channel/RS with a Tx beam corresponding to an Rx beam used for receiving the DL RS. When the source RS is the UL RS (e.g., SRS), the UE that receives the indication transmits the target UL channel/RS with a Tx beam corresponding to an Rx beam used for transmitting the UL RS. The DL beam RS (e.g., QCL type-D RS) may be indicated while being included in a DL TCI state, and the UL beam RS (e.g., spatial relation RS) may be indicated while being included in a UL TCI state.

Further, (for a UE in which a (one-to-one) correspondence relationship is established between the Tx and Rx beams), the source RSs for the DL and UL beams may be the same DL RS (e.g., CSI-RS, SSB) resource. A joint DL/UL TCI state may be configured/indicated to comprehensively indicate the DL RS.

AI/ML may be implemented at a base station/network (NW) terminal to perform spatial domain (SD) prediction like the BM-Case1. As an example, the UE performs measurement and report based on Set B. The base station uses such reporting information of the UE (e.g., CRI(s)/SSBRI(s)+L1-RSRP(s)) as input data for training and/or inference of an AI/ML model to perform beam indication of even finer granularity based on Set A. At this time, the following problem may occur.

The UE may not be able to perform measurements on all beam RSs belonging to Set A. The UE may not be able to manage the UE Rx beam and/or UE Tx beam for Set A beams. Even if the base station designates a beam RS that the UE is not able to manage as the source RS, the UE may have difficulty in deriving the Rx/Tx beam from the RS. That is, indicating the beam of Set A directly as the source RS may not be of much help to the UE. In order to solve such a problem, the present disclosure proposes the following methods.

### Method 1

The base station indicates, to the UE, a plurality of RSs among the RSs belonging to Set B as beam RSs to be used for transmission and/or reception of the target RS/channel, and combining coefficients for the corresponding beam RSs.

A DL beam indication based on the embodiment may be interpreted/applied as follows in relation to transmission (or reception) of a DL channel/signal.

As an example, the DL beam indication may be interpreted/applied as an indication that the base station creates and transmits a combining beam through the beam RSs and the corresponding combining coefficients. That is, the base station may transmit the DL channel/signal based on the combining beam determined/generated through the beam RSs and the corresponding combining coefficients.

As an example, the DL beam indication may mean that the UE may apply/use a (combined or selected) Rx beam by referring to the combining coefficient for a UE Rx beam(s) for the corresponding beam RSs. That is, the UE may receive the DL channel/signal from the base station based on the Rx beam determined/generated through the beam RSs and the corresponding combining coefficients.

A UL beam indication based on the embodiment may be interpreted/applied as follows in relation to transmission of a UL channel/signal.

As an example, when the beam RSs are the DL RSs, this may mean that the UE applies/uses a Tx beam corresponding to the (combined or selected) Rx beam by referring to the combining coefficient for the Rx beam(s) used for receiving the corresponding DL RSs.

As an example, this may mean that the UE applies/uses the (combined or selected) Tx beam by referring to the combining coefficient for the Tx beam(s) corresponding to the Rx beam(s) used for receiving the corresponding DL RSs.

As an example, when the beam RSs are the UL RSs, this may mean that the UE applies/uses the (combined or selected) Tx beam by referring to the combining coefficient for the Tx beam(s) used for receiving the corresponding UL RSs.

Hereinafter, a specific example is given to describe the operation/embodiment based on Method 1.

The base station indicates w1 and w2 as combining coefficients while indicating CRI#1 and CRI#2 to the UE with beam RSs. In other words, the base station transmits a beam indication including CRI#1 and CRI#2 and w1 and w2 to the UE. As an example, w1 and w2 are complex numbers and may be normalized to |*w*1|² + |*w*2|² = 1. As an example, w1 and w2 may be indicated from a predefined codebook. The indication may mean that a combining beam is generated with w1 * CRI#1 + w2 * CRI#2, and used as a base station beam.

Hereinafter, another example is given to describe the operation/embodiment on Method 1.

The base station indicates w1 and w2 as the combining coefficients while indicating SRI#1 and SRI#2 with UL beam RSs. In other words, the base station transmits a beam indication including SRI#1 and SRI#2 and w1 and w2 to the UE. As an example, w1 and w2 are the complex numbers and may be normalized to |*w*1|² + |*w*2|² = 1. As an example, w1 and w2 may be indicated from a predefined codebook. The indication may mean that a combining beam is generated with w1 * SRI#1 + w2 * SRI#2, and used as a UE Tx beam.

In Method 1, when the source/beam RS for the DL beam and the UL beam are integrally configured/indicated (via a joint DL/UL TCI state), the corresponding beam RS (i.e., the indicated RS) may have both a meaning of the DL beam and a meaning of the UL beam (corresponding to the case where the beam RS is the DL RS).

In Method 1, a UE capability reporting operation may be performed. Specifically, the UE may transmit capability information to the base station. The capability information may include information for at least one of i) beams that the UE may combine (by considering a granularity of a phase shifter, etc.), and/or ii) a combining coefficient(s) (for beam RSs and corresponding beam RSs) supported by the UE.

The combining coefficient may be determined in terms of the base station Tx/Rx beam, and/or determined in terms of the UE Tx/Rx beam. In a latter case, Tx/Rx beam configuration information of the UE (e.g., a total number of beams, beam ID information, relative/absolute boresight angle information for each beam, beamwidth information, beamforming coefficient information, etc.) may be reported to the NW (or base station), and used for enhancing a prediction performance of an NW AI/ML model. In a former case, how the indicated beam RSs and beam combining coefficients are used/applied in order to determine the Rx/Tx beam of the UE may be determined by an implementation of the UE.

Complementary to or alternative to Method 1, when the base station knows the Rx/Tx beam information of the UE, the NW may compute/calculate/obtain the Rx/Tx beam of the UE corresponding to the NW Tx/Rx beam obtained through SD prediction, which may be directly indicated to the UE.

As an example, the Rx/Tx beam ID of the UE may be included in the beam indication or the indication may be performed instead of the existing beam indication.

As an example, the base station may indicate, to the UE, a plurality of UE Rx/Tx beam IDs and combining coefficient information. The UE may generate a combining beam through the indicated combining coefficients, and perform reception/transmission. In order to apply the example, the UE may report, to the base station, information for beams which may be combined and/or a combining coefficient(s) for beam RSs supported by the UE (as the UE capability).

By complementing/replacing the method, the following embodiment may be considered.

As an example, the UE may report, to the base station, a preferred UE Rx/Tx beam ID (along with a measurement value(s) corresponding to the corresponding beam). The base station (AI/ML) may generate/apply an appropriate combining beam by assuming that the UE performs reception/transmission with the corresponding beam.

As an example, the base station may perform beam reporting (e.g. preferred CRI(s)/SSBRI(s) and corresponding L1-RSRP/SINR value(s)) for a specific UE beam ID to the UE. The beam reporting information may be utilized for training/inference of the NW AI/ML, and utilized for predicting/compute a base station beam suitable for the corresponding UE beam.

By applying/extending Method 1, the DL RS and the UL RS may be jointly used as the beam RS as follows.

### Method 2

The base station indicates, to the UE, at least one DL RS and at least one UL RS as beam RSs for transmission and/or reception of a target RS/channel. Further, the base station may additionally indicate, to the UE, combining coefficients for the corresponding beam RSs.

A DL beam indication based on the embodiment may be interpreted/applied as follows in relation to transmission (or reception) of a DL channel/signal.

As an example, the UE that receives the DL beam indication may operate as follows. The UE may apply/use a combined/determined/selected Rx beam (with reference to the combining coefficients) based on i) a UE Rx beam(s) for the DL RS(s) and ii) an Rx beam(s) corresponding to the Tx beam(s) applied for the UL RS(s).

As an example, the base station may generate a transmission beam for the target channel/RS by combining a Tx beam corresponding to the DL RS and a Tx beam corresponding to the UL RS receive beam (with the coefficient).

A UL beam indication based on the embodiment may be interpreted/applied as follows in relation to transmission of a UL channel/signal.

As an example, the UE that receives the UL beam indication may operate as follows. The UE may apply/use a combined/determined/selected Tx beam (with reference to the combining coefficients) based on i) a UE Tx beam(s) for the UL RS(s) and ii) a Tx beam(s) corresponding to the Rx beam(s) applied for the DL RS(s).

As an example, the base station may generate a receive beam for the target channel/RS by combining an Rx beam corresponding to the UL RS and an Rx beam corresponding to the Tx beam of the DL RS (with the coefficient).

Method 2 is a method for expressing/indicating Set A beam through a combination of DL RS and UL RS.

Method 1 of the present disclosure may be extended/applied to UL pathloss RS (PL-RS) configuration/indication. For example, the base station may configure/indicate a plurality of DL RS resources to the UE with a PL-RS, and configure/indicate combining coefficients for the corresponding resources.

### Method 3

The base station indicates, to the UE, a plurality of DL RSs as a PL-RS to be used for transmission of the target UL RS/channel and combining coefficients for the corresponding RSs.

As an example, the UE that receives the configuration/indication may obtain each pathloss value (e.g., pathloss estimate) computed from each PL-RS and a pathloss value combined based on the indicated combining coefficient. The UE may use/apply the combined pathloss value as a pathloss value for a UL power control of the target UL RS/channel.

As an example, the UE may predict/obtain a (channel and) pathloss value for the combined RS through the plurality of PL-RSs and the combining coefficients. The UE may use/apply the (channel and) pathloss value for the combined RS as the pathloss value for the UL power control of the target UL RS/channel.

Although the beam indication according to the embodiment described above is described with a focus on the plurality of beam RSs and the combining coefficient(s), the information included in the beam indication is not limited to the corresponding information. The beam indication may include information related to Set A/Set B.

As an example, the beam indication described above may include another information instead of the plurality of beam RSs and the combining coefficients. Specifically, the beam indication may include coordinate information of each Set A/Set B beam on a certain grid/axis (e.g., on a predefined grid/axis).

In this case, the corresponding coordinate information or the corresponding index information may be used to replace the plurality of RSs and coefficient information in Method 1/Method 2/Method 3 above. The beam grid may be constituted by a one-dimensional, two-dimensional, or three-dimensional grid. The beam grid may be interpreted/defined as a grid for a beam boresight angle, a grid for a location at which each beam is pointing, or a grid for an area covered by each beam. The beam grid may be defined/configured in advance between the UE and the base station.

The following embodiment may be considered for a problem to be solved by the present disclosure. Specifically, a method may be considered to transmit a corresponding beam RS so that the UE may find an Rx/Tx beam for the corresponding beam RS before the beam indication of the base station. In light of this, the following method is proposed.

### Method 4

The base station selects and indicates, to the UE, a beam RS to be used for transmission and/or reception of the target RS/channel in Set A , but the UE expects that the corresponding beam RS is transmitted/measured within a predetermined time prior to the corresponding beam indication. In other words, the beam RS which the base station indicates to the UE may be based on an RS(s) that is transmitted to the UE a predetermined time before the time of the beam indication.

According to Method 4, it is guaranteed that the UE finds the Rx/Tx beam based on the indicated beam RS through measurements of the UE performed within a predetermined time prior to the beam indication. Specifically, the beam indication is performed based on Set A. The indicated beam RS may be a beam RS received/measured by the UE within a predetermined time prior to the beam indication. This allows the UE to find the Rx/Tx beam from the indicated beam RS.

As an example, the 'predetermined time' may be defined in advance as an absolute time (e.g., X msecs) or a relative time (e.g., Y slots).

As an example, the 'predetermined time' may be an absolute/relative time which the base station sets to the UE. At this time, a minimum time applicable to each UE may be different, and the UE may report the minimum time supported by the corresponding UE to the base station (as the UE capability). Additionally, the UE may expect a specific configuration (e.g., repetition = 'ON') so that the UE may more accurately find the Rx/Tx beam for the beam RS.

Method 4 above may also be extended and applied to the PL-RS. For example, it may be assumed that the base station intends to change the PL-RS to a specific PL-RS or to indicate the corresponding specific PL-RS. The base station may ensure that the UE may measure the specific PL-RS (to be changed) within a predetermined time prior to a change/indication related to the PL-RS. In other words, the base station may transmit the specific PL-RS to the UE within the predetermined time prior to the change/indication related to the PL-RS. In other words, the UE may receive the specific PL-RS from the base station within the predetermined time prior to the change/indication related to the PL-RS.

In this case, for more stable pathloss calculation, the base station may ensure that the UE may measure the specific PL-RS a predetermined number of times or more within a predetermined time.

Alternatively, the change/indication related to the PL-RS may be performed only based on a PL-RS measured a predetermined number of times or more (at a predetermined period/interval or more).

The 'predetermined period', 'predetermined interval', or 'predetermined number of times' may be based on i) a predefined value, ii) a value which the base station sets to the UE, and/or iii) a value which the UE reports to the base station (as the UE capability) (a value associated with the reported value).

Although the proposed technologies of the present disclosure are described based on indicating one beam per target RS/channel, a plurality of beams may be indicated for an RS/channel to which DL/UL multi-TRP/panel transmission is applied. In this case, the embodiments described above may be extended and applied to a method for indicating the plurality of beams.

Although the proposed technologies of the present disclosure are described based on NW AI/ML, this does not mean that the technologies of the present disclosure may be applied only in an AI/ML implementation environment of the NW, but the proposed technologies may also be applied in a UE AI/ML implementation environment or a non-AI/ML environment. Further, another UE is applied instead of the base station/NW, and may also be applied to sidelink communication. Further, it is mainly assumed that the NW AI/ML performs training/inference based on a beam report of the UE, but this is not a limitation, and it is also possible to perform training/inference for the NW AI/ML model through uplink transmission of the UE and/or another UE report information (e.g., a CSI report, an RRM report, etc.).

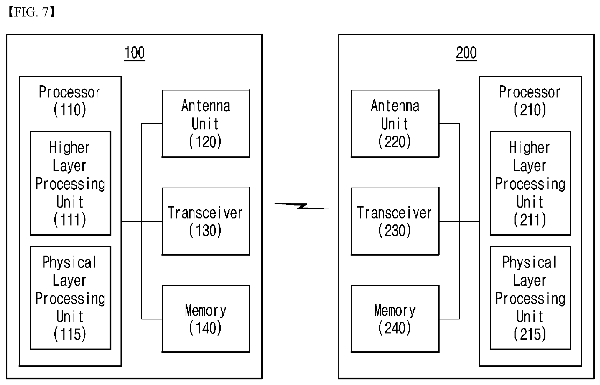

In terms of implementation, the operations (e.g., operations based on at least one of Methods 1 to 4) of the base station/UE according to the above-described embodiments may be processed by devices (e.g., processors 110 and 210 in FIG. 7) in FIG. 7 to be described below.

Further, the operations (e.g., operations based on at least one of Methods 1 to 4) of the base station/UE according to the above-described embodiment may be stored in memories (e.g., 140 and 240 in FIG. 7) in the form of an instruction/program (e.g., instruction or executable code) for driving at least one processor (e.g., 110 and 210 in FIG. 7).

Hereinafter, the signaling procedure based on the above-described embodiments will be specifically described with reference to FIG. 4.

FIG. 4 illustrates an example of a signaling between a user equipment (UE) and a network (NW) based on the above-described proposed methods (e.g., Method 1, Method 2, and Method 3). Here, the UE/NW is just an example, and may be replaced and applied with various devices such as the device of FIG. 7. FIG. 4 is just for convenience of description and does not limit the scope of the present disclosure. Further, some step(s) illustrated in FIG. 4 may be omitted according to a situation and/or a configuration. The base station belonging to the NW in FIG. 4 may correspond to any entity such as base station (BS), node B, TRP, etc.

The UE may report UE capability information to the NW (S405). The UE capability information may include report information for UE beam configuration information.

The UE may receive a Set B (and Set A) related configuration from the NW (S410). The configuration may include configuration information related to TCI states, ID information for UE beams, a transmission cycle and time/frequency location information, sequence information, and information on a relevancy between RSs (e.g., whether there is QCL), beam angle information, and beam width information.

After the beam related configuration (S410), the base station transmits RSs belonging to Set B to the UE, and the UE may perform measurement therefor (S415).

The UE that performs the beam related configuration (S410) and measurement for Set B beams (S415) may perform reporting of a corresponding measurement value(s) (S420).

Based on the report information of the UE and/or another uplink signal/information, the NW (AI/ML) may perform beam/PL-RS prediction/selection (S425), and perform a beam/PL-RS indication for a target channel/RS (S430). In such a beam/PL-RS indication process, the above-described proposed methods (e.g., Method 1, Method 2, and Method 3) may be utilized/applied.

As mentioned above, the above-described NW/UE signaling and operation may be implemented by the devices 100 and 200 in FIG. 7. For example, the NW may correspond to a first device 100 and the UE may correspond to a second device 200, and in some cases, an opposite case thereto may also be considered.

For example, the above-described NW/UE signaling and operation may be processed by at least one processor 110 or 210 of FIG. 7, and the above-described NW/UE signaling and operation may be stored in a memory (140 or 240 in FIG. 7) in the form of a command/program (e.g. instruction, executable code) for driving at least one processor (110 or 210 in FIG. 7).

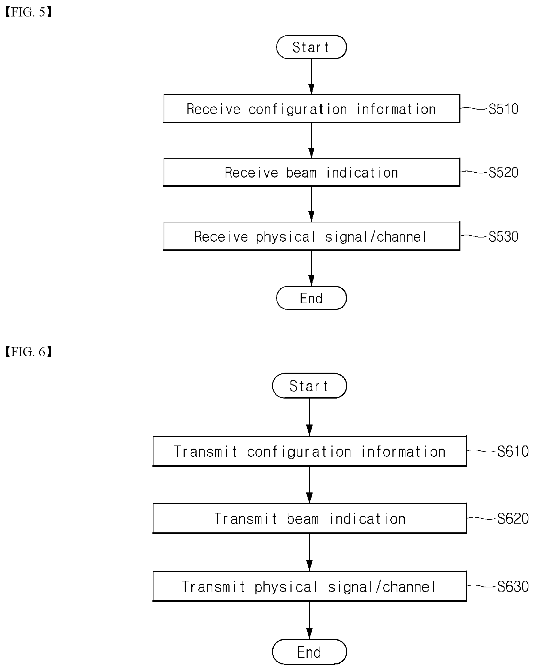

Hereinafter, the above-described embodiments will be described in detail with reference to FIGS. 5 and 6 in terms of the operations of the UE and the base station. Methods to be described below are just distinguished for convenience of description and it is needless to say that some components of any one method may be substituted with some components of another method or may be applied in combination with each other.

FIG. 5 is a flowchart for describing a method performed by the UE in the wireless communication system according to an embodiment of the present disclosure.

Referring to FIG. 5, the method performed by the UE in the wireless communication system according to an embodiment of the present disclosure includes a configuration information receiving step S510, a beam indication receiving step S520, and a physical signal/channel receiving step S530.

In S510, the UE receives configuration information from the base station. The configuration information may be received through a higher layer signaling (e.g., RRC signaling).

The configuration information may include i) a configuration for beam indication related to spatial prediction, and ii) information related to a plurality of reference signals (RSs) for the beam indication.

According to an embodiment, the configuration for the beam indication may include i) information for a plurality of combining coefficients related to the plurality of RSs, or ii) coordinate information of the plurality of RSs within a beam grid. The embodiment may be based on Method 1 or Method 3.

In S520, the UE receives a beam indication representing one or more of the plurality of RSs from the base station. As an example, the beam indication may be based on downlink control information (DCI) or medium access control (MAC) control element (CE). As an example, the beam indication may be based on DCI scheduling a physical signal/channel (e.g., PDSCH).

In S530, the UE receiving physical signals/channels from same time, frequency, and spatial resources based on the beam indication. Here, the same time, frequency, and spatial resources may mean the same time resource, the same frequency resource, and the same spatial resource. For reference, that is, the operation of S530 is distinct from an operation of an M-TRP SFN scheme where PDCCH/PDSCH is repeatedly received based on a plurality of spatial resources (e.g. beams based on a plurality of TCI states) in the same time and frequency resources. For example, reception of the physical signal/channel in the same spatial resource may mean reception of the physical signal/channel based on the same beam (or a spatial domain receive filter).

The physical signal/channel may be a physical downlink control channel (PDCCH), a physical downlink shared channel (PDSCH), or a channel state information-reference signal (CSI-RS).

According to an embodiment, the beam indication may include i) information for the one or more RSs, and ii) information for one or more combining coefficients related to the one or more RSs. The embodiment may be based on Method 1.

A spatial domain receive filter related to the spatial resource may be related to an RS determined based on the one or more RSs and the one or more combining coefficients.

According to an embodiment, the beam indication may include coordinate information of the one or more RSs within a beam grid. The embodiment may be based on Method 3.

The spatial domain receive filter related to the spatial resource may be related to an RS determined based on the coordinate information.

According to an embodiment, the one or more RSs may include i) at least one downlink RS (DL RS), and ii) at least one uplink RS (UL RS). The embodiment may be based on Method 2.

The spatial domain receive filter related to the spatial resource may be determined based on i) at least one first spatial domain receive filter, and ii) at least one second spatial domain receive filter.

The at least one first spatial domain receive filter may be based on the at least one DL RS.

The at least one second spatial domain receive filter may be related to at least one spatial domain transmission filter based on the at least one UL RS.

According to an embodiment, the beam indication may include i) information for a plurality of downlink RSs (DL RSs) of the one or more RSs, and ii) information for combining coefficients related to the plurality of DL RSs. The embodiment may be based on Method 3. A pathloss estimate for uplink power control may be determined based on the plurality of DL RSs.

The pathloss estimate for the uplink power control may be determined based on a plurality of pathloss estimates or one DL RS. Hereinafter, the pathloss estimate will be described in detail.

As an example, the pathloss estimate for the uplink power control may be determined based on i) pathloss estimates obtained based on the plurality of DL RSs, and ii) the combining coefficients.

As an example, one DL RS may be combined/determined based on the plurality of DL RSs and the combining coefficients. The pathloss estimate for the uplink power control may be determined/obtained based on the one DL RS.

According to an embodiment, the one or more RSs may be based on RSs received by the UE within a predetermined time before a time of receiving the beam indication. The embodiment may be based on Method 4.

The method may further include a capability information transmitting step. In the step, the UE transmits capability information to the base station. The capability information may include i) information for combining coefficients which may be supported by the UE and/or ii) information for beams which may be combined by the UE based on the combining coefficients. The embodiment may be based on Method 1. The capability information transmitting step may be performed before S510.

The operations based on S510 to S530 and the capability information transmitting step described above may be implemented by the device in FIG. 7. For example, the UE 200 may control one or more transceivers 230 and/or one or more memories 240 to perform the operations based on S510 to S530 and the capability information transmitting step.

Hereinafter, the embodiments described above will be specifically described in terms of the operation of the base station.

S610 to S630, and a capability information receiving step to be described below correspond to S510 to S53, and the capability information transmitting step described in FIG. 5. By considering the correspondence relationship, redundant descriptions are omitted. That is, a specific description of the base station operation described below may be replaced with the description/embodiment of FIG. 5 corresponding to the corresponding operation. As an example, the description/embodiments of S510 to S530, and the capability information transmitting step in FIG. 5 may be additionally applied to the base station operations in S610 to S630, and the capability information receiving step described below.

FIG. 6 is a flowchart for describing a method performed by a base station according to another embodiment of the present disclosure.

Referring to FIG. 6, the method performed by the base station in the wireless communication system according to another embodiment of the present disclosure includes a configuration information transmitting step S610, a beam indication transmitting step S620, and a physical signal/channel transmitting step S630.

In S610, the base station transmits configuration information to the UE.

In S620, the base station transmits a beam indication representing one or more RSs among the plurality of RSs to the UE.

In S630, the base station transmits, to the UE, physical signals/channels in same time, frequency, and spatial resources based on the beam indication.

The method may further include a capability information receiving step. In the step, the base station receives capability information from the UE. The capability information receiving step may be performed before S610.

The operations based on S610 to S630 and the capability information receiving step described above may be implemented by the device in FIG. 7. For example, the base station 100 may control one or more transceivers 130 and/or one or more memories 140 to perform the operations based on S610 to S630, and the capability information receiving step.

FIGS. 5 and 6 are described by assuming a case where the embodiments in Methods 1 to 4 are applied to signaling of a DL channel/signal, but the embodiments in Methods 1 to 4 above may also be applied to a UL channel/signal. In this case, the physical channel/signal may be a physical uplink control channel (PUCCH), a physical uplink shared channel (PUSCH), or a sounding reference signal. The spatial resource may be related to a spatial domain receive filter. The UE may transmit the physical channel/signal to the base station based on the spatial domain transmission filter. In other words, the base station may receive, from the UE, the physical channel/signal transmitted based on the spatial domain transmission filter.

A device to which an embodiment of the present disclosure is applicable (a device implementing the method/operation according to an embodiment of the present disclosure) is described below with reference to FIG. 7.

FIG. 7 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 210 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

## Claims

1. A method performed by a user equipment (UE) in a wireless communication system, the method comprising:
receiving configuration information, wherein the configuration information includes i) a configuration for beam indication related to spatial prediction, and ii) information related to a plurality of reference signals (RSs) for the beam indication,
receiving bean indication representing one or more RSs among the plurality of RSs; and
receiving physical signals/channels in same time, frequency, and spatial resources based on the beam indication.

2. The method of claim 1, wherein the beam indication includes i) information for the one or more RSs, and ii) information for one or more combining coefficients related to the one or more RSs, and
wherein a spatial domain receive filter related to the spatial resource is related to an RS determined based on the one or more RSs and the one or more combining coefficients.

3. The method of claim 1, wherein the beam indication includes coordinate information of the one or more RSs within a beam grid, and
wherein a spatial domain receive filter related to the spatial resource is related to an RS determined based on the coordinate information.

4. The method of claim 1, wherein the one or more RSs include i) at least one downlink RS (DL RS), and ii) at least one uplink RS (UL RS),
wherein a spatial domain receive filter related to the spatial resource is determined based on i) at least one first spatial domain receive filter and ii) at least one second spatial domain receive filter,
wherein the at least one first spatial domain receive filter is based on the at least one DL RS, and
wherein the at least one second spatial domain receive filter is related to at least one spatial domain transmission filter based on the at least one UL RS.

5. The method of claim 1, wherein the beam indication includes i) information for a plurality of downlink RSs (DL RSs) of the one or more RSs, and ii) information for combining coefficients related to the plurality of DL RSs, and
wherein a pathloss estimate for uplink power control is determined based on the plurality of DL RSs.

6. The method of claim 5, wherein the pathloss estimate for the uplink power control is determined based on i) pathloss estimates obtained based on the plurality of DL RSs, and ii) the combining coefficients.

7. The method of claim 5, wherein one DL RS is determined based on the plurality of DL RSs and the combining coefficients, and
wherein the pathloss estimate for the uplink power control is obtained based on one DL RS.

8. The method of claim 1, wherein the one or more RSs are based on RSs received by the UE within a predetermined time before a time of receiving the beam indication.

9. The method of claim 1, wherein the configuration for the beam indication includes i) information for a plurality of combining coefficients related to the plurality of RSs, or ii) coordinate information of the plurality of RSs within a beam grid.

10. The method of claim 1, further comprising:
transmitting capability information,
wherein the capability information includes i) information for combining coefficients which may be supported by the UE and/or ii) information for beams which may be combined by the UE based on the combining coefficients.

11. A user equipment (UE) operating in a wireless communication system, the UE comprising:
one or more transceivers;
one or more processors; and
one or more memories operably connectable to the one or more processors, and storing instructions of configuring the one or more processors to perform operations based on being executed by the one or more processors,
wherein the operations include
receiving configuration information, wherein the configuration information includes i) a configuration for beam indication related to spatial prediction, and ii) information related to a plurality of reference signals (RSs) for the beam indication,
receiving bean indication representing one or more RSs among the plurality of RSs, and
receiving physical signals/channels in same time, frequency, and spatial resources based on the beam indication.

12. A device comprising: one or more memories and one or more processors functionally connected to the one or more memories,
wherein the one or more memories include instructions of configuring the one or more processors to perform operations based on being executed by the one or more processors, and
wherein the operations include
receiving configuration information, wherein the configuration information includes i) a configuration for beam indication related to spatial prediction, and ii) information related to a plurality of reference signals (RSs) for the beam indication,
receiving bean indication representing one or more RSs among the plurality of RSs, and
receiving physical signals/channels in same time, frequency, and spatial resources based on the beam indication.

13. One or more non-transitory computer-readable media storing one or more instructions, wherein the one or more instructions executable by one or more processors configure the one or more processors to perform operations, and
wherein the operations include
receiving configuration information, wherein the configuration information includes i) a configuration for beam indication related to spatial prediction, and ii) information related to a plurality of reference signals (RSs) for the beam indication,
receiving bean indication representing one or more RSs among the plurality of RSs, and
receiving physical signals/channels in same time, frequency, and spatial resources based on the beam indication.

14. A method performed by a base station in a wireless communication system, the method comprising:
transmitting configuration information, wherein the configuration information includes i) a configuration for beam indication related to spatial prediction, and ii) information related to a plurality of reference signals (RSs) for the beam indication;
transmitting bean indication representing one or more RSs among the plurality of RSs; and
transmitting physical signals/channels in same time, frequency, and spatial resources based on the beam indication.

15. A base station operating in a wireless communication system, the base station comprising:
one or more transceivers;
one or more processors; and
one or more memories operably connectable to the one or more processors, and storing instructions of configuring the one or more processors to perform operations based on being executed by the one or more processors,
wherein the operations include
transmitting configuration information, wherein the configuration information includes i) a configuration for beam indication related to spatial prediction, and ii) information related to a plurality of reference signals (RSs) for the beam indication,
transmitting bean indication representing one or more RSs among the plurality of RSs, and
transmitting physical signals/channels in same time, frequency, and spatial resources based on the beam indication.
